# EUROPÄISCHE PATENTSCHRIFT

(11) **EP 0 653 288 B1**
(45) Veröffentlichungstag und Bekanntmachung des Hinweises auf die Patenterteilung: **30.12.1998**
(21) Anmeldenummer: 94116371.9
(22) Anmeldetag: 18.10.1994
(51) Int. Cl.: B29C 65/20

(54) **Stumpfschweissmaschine für Kunststoffrohre**
Apparatus for butt welding of thermoplastic pipes
Machine pour le soudage bout à bout de tubes en matière thermoplastique

(30) Priorität: 05.11.1993 DE 4337751
(43) Veröffentlichungstag der Anmeldung: 17.05.1995
(73) Patentinhaber: ROTHENBERGER Werkzeuge Aktiengesellschaft, 60327 Frankfurt (DE)
(72) Erfinder: Basler, Michael, D-37235 Hessisch-Lichtenau (DE)
(74) Vertreter: Zapfe, Hans, Dipl.-Ing.

(56) Entgegenhaltungen:
- EP-A- 0 376 586
- EP-A- 0 453 903
- EP-A- 0 541 931
- DE-A- 1 950 977
- DE-U- 9 300 577
- GB-A- 2 002 477
- GB-A- 2 251 822
- GB-A- 2 251 913
- US-A- 3 013 925

## Beschreibung

Die Erfindung betrifft eine Stumpfschweißmaschine für Kunststoffrohre mit einem Maschinengestell mit mehreren Einspannschellen für die Halterung der Rohrenden mit zur gemeinsamen Schellenachse parallelen Führungen für die axiale Relativverschiebung der Einspannschellen zueinander und mit auf gegenüberliegenden Seiten der Schellenachse angeordneten Halteelementen für die Halterung eines Heizelements für die Erwärmung der Rohrenden, wobei
a) das Heizelement um eine zur Schellenachse parallele Schwenkachse schwenkbar in einem mit dem Heizelement auswechselbaren Tragkörper gelagert ist,
b) das Heizelement in Bezug auf seine Schwenkachse gewichtsentlastet ist,
c) das Heizelement mit einem Verriegelungselement versehen ist, durch das es in der Heizeinstellung gegen eine Schwenkbewegung nach oben arretierbar ist,
d) dem Verriegelungselement ein Auslöser zugeordnet ist, durch den nach dem Aufheizen der Rohrenden und deren Rückzug das Heizelement zum Aufwärtsschwenken entriegelbar ist, und wobei
e) die beiderseits des Heizelements angeordneten Einspannschellen Führungszapfen aufweisen, die mit Axialspiel in mindestens je eine achsparallele Kulissennut eingreifen, die jeweils in zwei beiderseits der Schellenachse befindlichen Kulissenplatten angeordnet sind, die mit den Halteelementen verbunden sind.

Auf derartigen Stumpfschweißmaschinen ausgeführte Schweißungen müssen in aller Regel den Richtlinien DVS 2207 genügen. Die in diesen Richtlinien festgelegten Schweißvorschriften werden auch beim Bau der vorstehend beschriebenen Stumpfschweißmaschine berücksichtigt. Danach dient zur Vorbereitung der Schweißnaht ein rotierender Planhobel, der die zu verschweißenden Stirnseiten der Rohre in eingespanntem Zustand in einen planparallelen Zustand bringt. Dies setzt voraus, daß Heizelement und Fräseinrichtung gegeneinander austauschbar sein müssen, ohne daß sich an der Einspannung der Rohrenden etwas ändert. Nach dem Austausch werden die Rohrenden an das Heizelement herangefahren, wobei vorgegebene Parameter wie Temperatur des Heizelements, Anpreßdruck und Verweilzeit außerordentlich genau einzuhalten sind, was in der Regel durch eine Programmsteuerung geschieht. Nach dem Aufheizen wird das Heizelement entfernt, und die Rohrenden werden aufeinander zugeführt, wobei die Einstellkraft für das Fügen zügig von Null auf einen vorgegebenen Endwert zu steigern ist. Fügedruck und Fügekraft sind bis zur Abkühlung der Schweißnaht aufrecht zu erhalten. Am Ende dieses Arbeitsgangs stellt sich an der Schweißstelle eine ganz bestimmte Wulstausbildung ein, die wiederum bestimmten Normenerfordernissen genügen muß. Grundvoraussetzung für das Erreichen der vorgegebenen Qualität der Schweißung ist eine ständig aufrecht erhaltene genaue axiale Ausrichtung der Rohre bzw. Rohrenden. Hierzu dienen mehrere auf dem Maschinengestell angeordnete Einspannschellen, die in der Regel paarweise auf jeder Seite der Fügestelle angeordnet sind und paarweise relativ zueinander verschiebbar sind.

Baugröße, Gewicht und Bedienungsgeschwindigkeit sind entscheidende Kriterien für den Bau von Stumpfschweißmaschinen für Kunststoffrohre. Hierbei ist nämlich zu berücksichtigen, daß die Auswechselbarkeit von Fräseinrichtung (Planhobel) und Heizelement nicht nur auf die Notwendigkeit eines alternativen Einsatzes zurückzuführen ist, sondern auch darauf, das das Maschinengestell nach Möglichkeit keine ständig vorhandenen Aufbauten besitzt. Es muß nämlich möglich sein, das Maschinengestell ohne derartige Aufbauten nach Vollendung einer Schweißung seitlich unter der geschweißten Rohrleitung herauszuziehen, die in der Regel in einem Graben verlegt ist, so daß sehr beengte Platzverhältnisse vorliegen.

Eine Stumpfschweißmaschine der eingangs beschriebenen Gattung ist durch das DE-GM 93 00 577.6 bekannt. Diese Stumpfschweißmaschine besitzt jedoch ein sogenanntes "Scherengelenksystem", durch das das Heizelement in jeder Stellung der Einspannschellen zueinander in der Mitte zwischen den beiden auf unterschiedlichen Seiten des Heizelements liegenden Einspannschellen gehalten wird. Diese Bauweise macht es erforderlich, daß die Rohrenden auf beiden Seiten des Heizelements weitgehend gleichmäßig über die genannten Einspannschellen überstehen, um auf beide Seiten des Heizelements den gleichen Anpreßdruck der Rohrenden ausüben zu können. Die Bedienungsperson muß beim Einspannen der Rohrenden also sehr genau auf den Überstand der Rohrenden über die Einspannschellen hinaus achten. Selbst beim Einsatz des weiter oben beschriebenen rotierenden Planhobels ist es nur bedingt möglich, unterschiedliche Rohrüberstände über die Einspannschellen auszugleichen, und das auch nur dann, wenn der Planhobel gleichfalls mittig zwischen den beiden unmittelbar benachbarten Einspannschellen festgelegt ist. Bei sehr unterschiedlichen Überständen würde dies zu einer erheblichen Zerspanungsleistung führen, die nur durch einen beträchtlichen Zeitaufwand zu erreichen ist.

Der Erfindung liegt daher die Aufgabe zugrunde, die eingangs beschriebene Stumpfschweißmaschine dahingehend zu verbessern, daß das Einlegen der Rohrenden in die Einspannschellen erleichtert wird, und zwar derart, daß die Bedienungsperson nicht mehr auf praktisch identische Überstände der Rohrenden über die dem Heizelement benachbarten Einspannschellen achten muß.

Die gestellte Aufgabe wird bei der eingangs angegebenen Stumpfschweißmaschine erfindungsgemäß dadurch gelöst, daß
f) die Kulissenplatten und damit das mit ihnen verbundene Heizelement nach Maßgabe des jeweils vorhandenen Axialspiels der Führungszapfen in den Kulissennuten durch die zu verschweißenden Rohrenden auf den Führungszapfen frei verschiebbar sind, und daß
g) der Auslöser für die Aufwärtsbewegung des Heizelements dem Tragkörper für das Heizelement zugeordnet ist.

Der Erfindungsgegenstand beruht auf einer vollständigen Abkehr vom Stande der Technik, bei dem das Heizelement stets mittig zwischen den unmittelbar benachbarten Einspannschellen gehalten wird. Innerhalb vernünftiger und im Bereich des Augenmaßes liegender Toleranzen kann die Bedienungsperson die Rohrenden verhältnismäßig grob justiert in den Einspannschellen festlegen und alsdann mittels des eingangs beschriebenen rotierenden Planhobels an den beiden einander zugekehrten Rohrenden exakt kreisringförmige Stirnflächen erzeugen, deren Achsen miteinander fluchten. Durch die Annäherung der Rohrenden von beiden Seiten an das Heizelement wird dieses gewissermaßen im Rahmen des Axialspiels zwischen Führungszapfen und Kulissennuten automatisch zentriert, so daß auf beiden Seiten des Heizelements ein gleicher Anpreßdruck vorliegt und damit auf beiden Seiten des Heizelements identische Aufwärm- und Erweichungsbedingungen vorliegen.

Durch das weitere Merkmal, den Auslöser für die Aufwärtsbewegung des Heizelements dem Tragkörper für das Heizelement zuzuordnen, wird gewährleistet, daß die Auslösung zuverlässig und unabhängig von der jeweiligen Stellung des Heizelements erfolgen kann.

Beim Stande der Technik nach dem DE-GM 93 00 577.6 war der besagte Auslöser dem Scherengelenksystem zugeordnet, d.h. seine Bewegungsbahn wurde durch die Zwangsführung der Kulissenplatten auf den Gelenkzapfen des Scherengelenksystems bestimmt. Hierbei konnte es durch Toleranzen, Verkantungen etc. vorkommen, daß der Auslöser nicht in der gewünschten Weise mit dem Verriegelungselement am Heizelement zusammenwirkte.

Weiterhin geraten beim Erfindungsgegenstand zahlreiche Gelenkstellen und bewegliche Bauteile in Fortfall, so daß sich der Erfindungsgegenstand auch durch eine geringere Wartungshäufigkeit und Reparaturanfälligkeit auszeichnet. Hierbei ist zu berücksichtigen, daß derartige Stumpfschweißmaschinen im Baustellenbetrieb, insbesondere aber in ausgehobenen Gräben für die Verlegung der zu verschweißenden Rohre eingesetzt werden.

Eine solche Stumpfschweißmaschine ist im Zuge einer weiteren Ausgestaltung der Erfindung in Richtung auf eine kompakte und betriebssichere Ausführung in besonders vorteilhafter Weise dadurch gekennzeichnet, daß das scheibenförmige Heizelement mittels eines radial abstehenden Fortsatzes mit seiner Schwenkachse verbunden ist, daß sich das Verriegelungselement an dem Fortsatz befindet, und daß ferner der Auslöser an einer Seitenwand einer das Heizelement in seiner oberen Stellung umschließenden Kammer befestigt und durch eine Fernsteuerung auslösbar ist.

Schließlich ergibt sich eine besonders zuverlässige Wirkungsweise dann, wenn der Auslöser eine in den Schwenkweg des Verriegelungselements ragende, parallel zur Schwenkachse verschiebbare Sperrklinke aufweist, die durch einen Fernsteuer-Impuls aus dem Schwenkweg zurückziehbar ist.

Weitere vorteilhafte Ausgestaltungen des Erfindungsgegenstandes ergeben sich aus den übrigen Unteransprüchen.

Ein Ausführungsbeispiel des Erfindungsgegenstandes wird nachfolgend anhand der Figuren 1 bis 4 näher erläutert.

Es zeigen:
- Figur 1: eine Seitenansicht einer Stumpfschweißmaschine in einem Ausrüstungszustand für die Vorwärmung der zu verschweißenden Rohrenden,
- Figur 2: eine teilweise geschnittene Seitenansicht mit Blickrichtung gemäß dem Pfeil II in Figur 1 in vergrößertem Maßstab,
- Figur 3: einen Teilausschnitt aus Figur 1 im gleichen Maßstab wie Figur 2 und
- Figur 4: einen Vertikalschnitt durch den in Figur 3 durch den Kreis IV hervorgehobenen Ausschnitt.

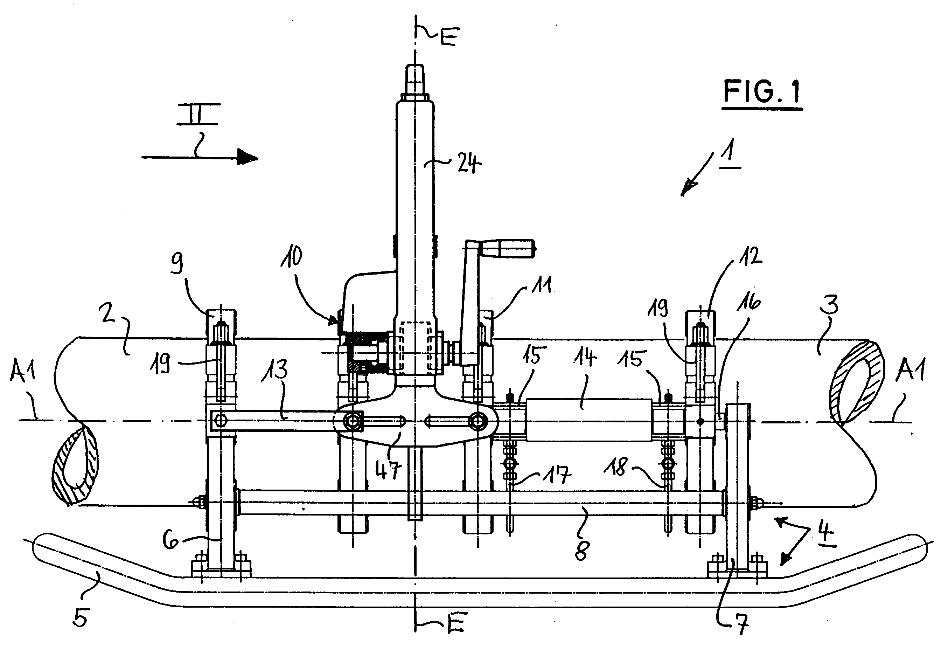

Figur 1 zeigt eine Kunststoffschweißmaschine 1 für Kunststoffrohre 2 und 3, die aus einem thermoplastischen Kunststoff bestehen und in der Ebene E-E verschweißt werden sollen. Zur Vorrichtung gehören ein Maschinengestell 4, zu dem Kufen 5, U-förmig ausgeschnittene Maschinenständer 6 und 7 sowie Distanzrohre 8 und Führungen 16 gehören, um nur die wichtigsten Bauelemente zu nennen. Die Führungen 16 sind gleichzeitig Kolbenstangen, worauf weiter unten noch näher eingegangen wird.

Das obere Ende des Maschinenständers 6 ist gleichzeitig als Einspannschelle 9 für das Rohr 2 ausgebildet. Drei weitere Einspannschellen 10, 11 und 12 sind mittels entsprechender Bohrungen auf den beiden Führungen 16 angeordnet, von denen in Figur 1 nur die vordere sichtbar ist. Die Einspannschellen 9 und 10 sind mittels des Maschinenständers 6 ortsfest angeordnet und auf beiden Seiten durch je eine Distanzlasche 13 in einem festen Abstand zueinander gehalten.

Die beiden anderen, gleichfalls ein Paar bildenden Einspannschellen 11 und 12 sind auf den Führungen 16 verschiebbar, werden aber gleichfalls in einem festen Abstand zueinander gehalten, und zwar durch einen Hydraulikzylinder 14 bzw. durch Distanzbolzen 15. Die Führungen bzw. Kolbenstangen 16 erstrecken sich zwischen den Maschinenständern 6 und 7.

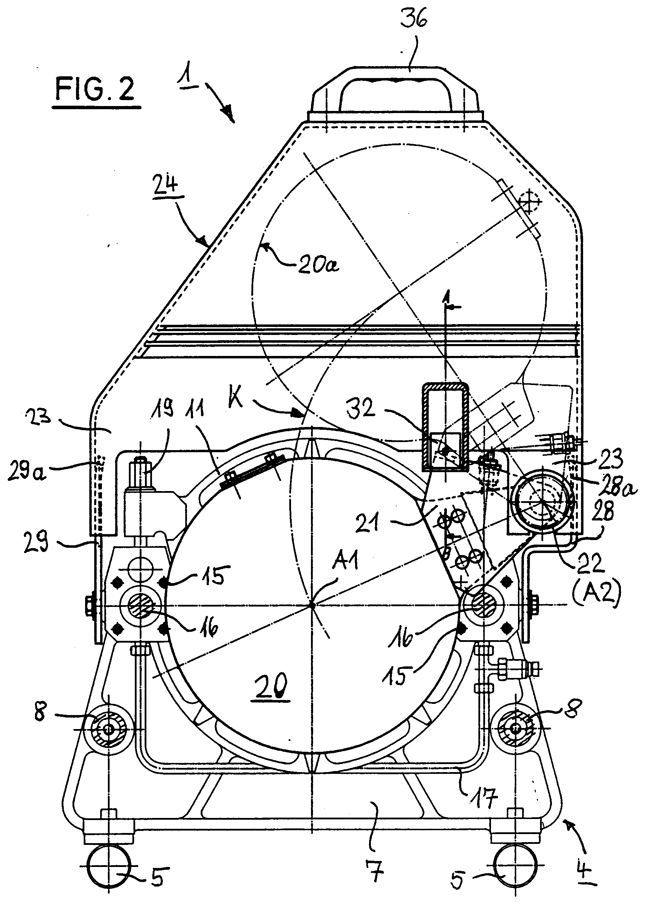

Figur 2 zeigt die räumliche Lage der Kolbenstangen und Führungen 16, die parallel zu den Distanzrohren 8 verlaufen. Auf diesen Kolbenstangen sind nicht gezeigte Kolben angeordnet, die sich im Innern der Hydraulikzylinder 14 befinden. Durch alternative Beaufschlagung der beiden Kolbenflächen über die Druckmittelleitungen 17 und 18 lassen sich die beiden Einspannschellen 11 und 12 um eine begrenzte Strecke auf den Führungen 16 verschieben. Mittels der Hydraulikzylinder 14 werden auch die erforderlichen - dosierten - Fügekräfte aufgebracht.

Die jeweils oberen Teile der Einspannschellen 9, 10, 11 und 12 sind vollständig abnehmbar und werden beim Betrieb durch Zuganker 19 gegen die Rohre 2 und 3 verspannt. Die Einspannschellen 9 bis 12 definieren eine gemeinsame Schellenachse A1-A1, die mit der Rohrachse identisch ist.

Die zur Stumpfschweißmaschine weiterhin noch gehörende Fräseinrichtung (Planhobel) sowie die Steuereinrichtungen sind zeichnerisch nicht dargestellt.

Figur 2 sind weitere Einzelheiten des Maschinengestells sowie des Heizelements und der zugehörigen Bauelemente zu entnehmen.

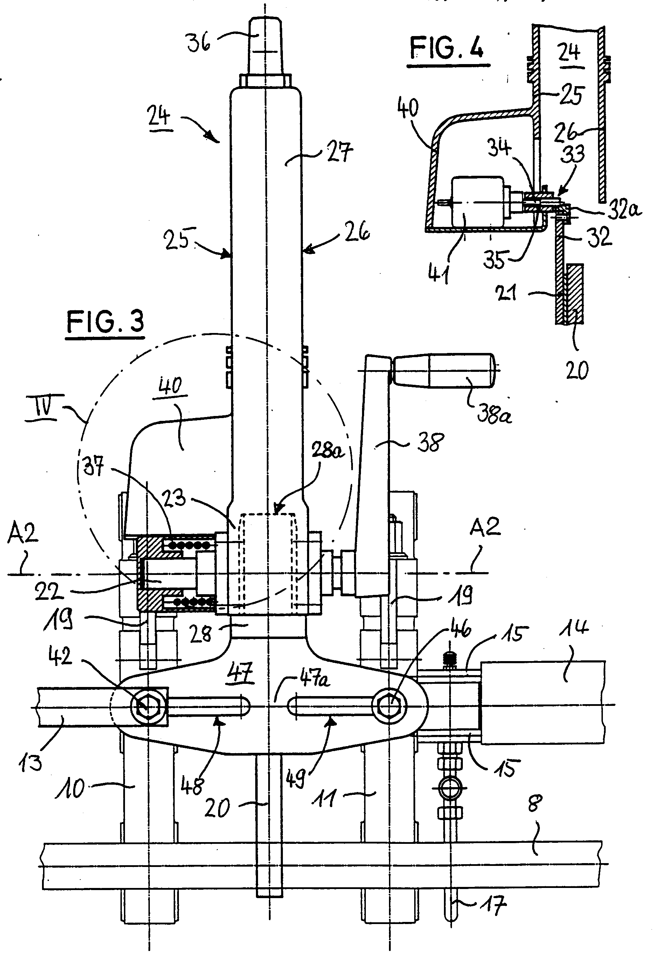

Das plattenförmige Heizelement 20, das in seinem Innern einen elektrischen Heizwiderstand trägt und dessen beide ebenen Außenflächen mit einer den Kunststoff abstoßenden Oberflächenbeschichtung versehen sind, ist ausgezogen in seiner Tiefststellung (Schweißstellung) gezeichnet, darüber mit einer strichpunktierten Kreislinie 20a in seiner Höchststellung (Ruhestellung). Der Mittelpunkt des Heizelements 20 wird dabei auf einer Kreisbahn K bewegt. Zu diesem Zweck besitzt: das Heizelement 20 an einer Umfangsstelle oberhalb der Kolbenstange 16 einen hebelartigen Fortsatz 21, in dessen außen liegendem Ende verdrehfest ein Gelenkzapfen 22 angeordnet ist. Dieser Gelenkzapfen ist an zwei Stellen in einem Tragkörper 23 gelagert, der in diesem Falle durch das untere Ende einer nach oben hin geschlossenen Kammer 24 gebildet wird, die aus zwei angenähert planparallel angeordneten Wänden 25 und 26 und aus einer dazwischenliegenden Zarge 27 besteht (siehe insbesondere Figur 3).

Der Tragkörper 23 ruht auf gegenüberliegenden Seiten der Schellenachse A1-A1 auf Halteelementen 28 und 29. Auf die spezielle Ausbildung der Halteelemente 28 und 29 wird nachstehend im Zusammenhang mit Figur 3 noch näher eingegangen werden.

Der Fortsatz 21 besitzt ein nach oben abstehendes Verriegelungselement 32, das durch einen laschenförmigen Vorsprung des Fortsatzes 21 gebildet wird. Durch das Verriegelungselement 32 wird das Heizelement 20 in seiner Schweißstellung gehalten. Um nun nach Beendigung der Aufheizung der Rohrenden eine Freigabe des Heizelements zur Rückkehr in seine Ruhestellung (Position 20a) zu ermöglichen, ist dem Verriegelungselement (32) ein Auslöser 33 zugeordnet, auf dessen Bau- und Wirkungsweise im Zusammenhang mit Figur 4 noch näher eingegangen wird.

Die Kammer 24 besitzt an ihrem oberen Ende einen Handgriff 36, mit dem die Kammer 24 und damit das (hochgeschwenkte) Heizelement 20 von den Halteelementen 28 und 29 abgehoben werden kann. Es ist Figur 2 sehr deutlich zu entnehmen, daß die Kammer 24 sehr raumsparend ausgebildet ist und insbesondere in ihrem oberen Bereich keine störenden Ecken aufweist, die die Kammer 24 sperrig machen würden und die Handhabung behindern. Es ist insbesondere Figur 3 zu entnehmen, daß die Kammer 24 auch sehr schmal ausgebildet ist, da in der Kammer selbst keine Führungseinrichtungen angeordnet sein müssen, wie dies bei einem Parallelhub des Heizelements 20 der Fall wäre.

Aus Figur 3 geht ergänzend folgendes hervor:

Der Gelenkzapfen 22 ist mit beiden Enden aus dem Tragkörper 23 bzw. der Kammer 24 herausgeführt und trägt auf seinem einen Ende eine Torsionsfeder 37, die die Gewichtsentlastung des Heizelements 20 um seine Schwenkachse A2-A2 bzw. um den Gelenkzapfen 22 bewirkt. Diese Torsionsfeder 37 ist als Schraubenfeder ausgebildet und in konzentrischer Lage auf dem Gelenkzapfen 22 gehalten. Sie ist mit einem Ende verdrehfest mit dem Gelenkzapfen 22 verbunden, mit dem anderen Ende gleichfalls verdrehfest mit dem Tragkörper 23. Sie ist fernerhin in einem solchen Maße vorgespannt, daß das Heizelement 20 nach Auslösung des Verriegelungselements 32 in seine Höchststellung (Position 20a) zurückkehrt (Figur 2). Das andere Ende des Gelenkzapfens 22 trägt verdrehfest einen Handhebel 38 mit einem Griff 38a, der zum Einschwenken des Heizelements 20 in dessen Heizstellung (Figur 2, unten) dient. Bei der Betätigung des Handhebels wird naturgemäß die Torsionsfeder 37 weiter gespannt.

Figur 3 zeigt ergänzend weitere Einzelheiten der Führungseinrichtung für die Parallelführung der Kammer 24 mit dem Heizelement 20: die beiden inneren Einspannschellen 10 und 11 tragen je einen eingeschraubten Führungszapfen 42 und 46, die in Kulissennuten 48 und 49 einer Kulissenplatte 47 eingreifen. Die Kulissennuten 48 und 49 verlaufen parallel zur Schellenachse A1-A1. Zwischen den Kulissennuten 48 und 49 befindet sich ein Steg 47a, der jedoch nur zu Versteifungszwecken dient, damit die Kulissenplatte 47 nicht unnötig geschwächt wird. Es ist aber ebenso gut denkbar, die Kulissennuten 48 und 49 durchgehend als eine einzige Kulissennut auszubilden. Mittels dieser Kulissennuten 48 und 49 ist die Kulissenplatte 47 auf den Führungszapfen 42 und 46 exakt geführt, und zwar derart, daß die Hauptebene E-E der Heizelement 20 stets senkrecht verläuft.

Gemäß Figur 3 besitzt die Kulissenplatte 47 zusätzlich in ihrer Mitte jeweils eines der nach oben weisenden Halteelemente 28 bzw. 29, die sich in je einer Führungsschiene *) fortsetzen, die an ihren oberen Enden leicht abgeschrägt und nach innen gebogen ist, um das aufsetzen des Tragkörpers 23 mit dem Heizelement 20 zu erleichtern. Zwischen den Führungsschienen *) und dem jeweiligen Halteelement 28 und 29 befinden sich hier nicht näher bezeichnete Schulterflächen, auf die die Unterkanten des Tragkörpers 23 aufgesetzt sind. Diese Maßnahme trägt zur leichten und exakten Positionierung der Kammer 24 mit dem Heizelement 20 bei, wie sich unschwer aus Figur 3 ergibt.
*) 28a bzw. 29a (siehe auch Figur 2)

Gemäß der Schnittdarstellung in Figur 4 besitzt das Verriegelungselement 32 als Verlängerung des Fortsatzes 21 an seinem oberen Ende ein auswechselbares Anschlagstück 32a, dessen Oberseite keilförmig abgeschrägt ist, um das Abgleiten des Auslösers 33 bei dessen Rückzug zu erleichtern. Der Auslöser 33 besitzt eine stiftförmige Sperrklinke 34, die in einer Lagerhülse 35 geführt ist, die ihrerseits an der Seitenwand 25 der Kammer 24 befestigt ist. Diese Seitenwand 25 besitzt ein einstückig angeformtes Zusatzgehäuse 40, in dem ein Antrieb 41 für die Sperrklinke 34 untergebracht ist. Dieser Antrieb kann ein elektromechanischer Antrieb, sehr wohl aber auch ein hydraulischer Antrieb sein. Es ist erkennbar, daß sich die Sperrklinke 34 stets gemeinsam mit der Kammer 24 und dem Heizelement verschiebt, so daß sich an den Eingriffsverhältnissen des Auslösers 33 und des Verriegelungselements 32 nichts ändert.

Die beschriebene Stumpfschweißmaschine hat folgende Wirkungsweise:

In den Figuren 1 und 3 sind die Einspannschellen 9 bis 12 in ihrer am weitesten auseinandergezogenen Stellung dargestellt. In dieser Stellung stoßen die Führungszapfen 42 und 44 an die voneinander abgekehrten Enden der Kulissennuten 48 und 49 an, wie dies besonders deutlich aus Figur 3 hervorgeht. In dieser Stellung ist die Kammer 24 mit dem Heizelement 20 zentriert, und die Kulissenplatte 47 hat keine Bewegungsfreiheit. In dieser Stellung läßt sich die Kammer 24 mit dem Heizelement 20 problemlos auf die Führungsschienen 48 aufsetzen.

Sobald nun der Hydraulikzylinder 14 mit Druck beaufschlagt wird, bewegen sich die beiden Einspannschellen 11 und 12 mit dem darin eingespannten Kunststoffrohr 3 in Richtung auf das Heizelement 20, wobei sich der Führungszapfen 46 vom rechten Ende der Kulissennut 49 entfernt, bis die plangehobelte Stirnfläche des Rohres 3 am Heizelement 20 zur Anlage kommt. In dieser Position kann sich der Führungszapfen 46 in etwa in der Mitte der Länge der Kulissennut 49 befinden.

Bei weiterer Einwärtsbewegung der Einspannschellen 11 und 12 wird die Kammer 24 mit dem Heizelement 20 nunmehr mitgenommen, bis dieses an das axial gegenüberliegende Kunststoffrohr 2 anstößt. Dieser Bewegung folgt auch die Ebene E-E (Figur 1). Hierbei verschiebt sich die Kulissenplatte 47 relativ gegenüber dem ortsfesten Führungszapfen 42, so daß dieser in etwa auch in der Mitte der Länge der Kulissennut 48 zu liegen kommt. Die Führungszapfen 42 und 46 haben somit nach beiden Seiten in etwa gleiches Axialspiel, wobei dieses Axialspiel von der Lage der miteinander zu verbindenden Stirnflächen der Rohre 2 und 3 abhängt. Wie bereits gesagt, braucht die Fixierung der Rohre 2 und 3 in den Einspannschellen nicht sehr genau durchgeführt zu werden, da das besagte Axialspiel der Führungszapfen 42 und 46 in den Kulissennuten 48 und 49 einen entsprechenden Ausgleich erlaubt.

In jedem Falle liegen die zu verschweißenden Rohrenden auf beiden Seiten des Heizelements 20 mit gleicher Flächenpressung an, wobei sich hieran auch dann nichts ändert, wenn die Rohrenden bei zunehmender Erwärmung in den plastischen Zustand übergeführt werden. Hierbei erfolgt lediglich eine weitere Relativverschiebung der Führungszapfen 42 und 46 in den Kulissennuten 48 und 49.

Sobald der vorgeschriebene Plastifizierungszustand erreicht ist, werden die Einspannschellen 9 und 10 einerseits und die Einspannschellen 11 und 12 andererseits durch den Hydraulikzylinder 14 auseinandergezogen, bis die Führungszapfen 42 und 46 wieder an den voneinander abgekehrten Enden der Kulissennuten 48 und 49 anliegen, wie dies in den Figuren 1 und 3 gezeigt ist. Etwa gleichzeitig wird der Auslöser 33 betätigt und die Sperrklinke 34 zurückgezogen, so daß das Verriegelungselement 32 und damit das Heizelement 32 zu einer Aufwärtsbewegung freigegeben werden.

Unmittelbar anschließend wird der Hydraulikzylinder wieder in entgegengesetztem Sinne angesteuert, so daß die Einspannschellen 11 und 12 mit dem eingespannten Rohr 3 sich wieder in Richtung auf die ortsfesten Einspannschellen 9 und 10 mit dem eingespannten Rohr 2 bewegen. Hierbei gleiten die Führungszapfen 42 und 46 wieder in den zugehörigen Kulissennuten 48 und 49, wobei in diesem Falle die relative Lage der Kulissenplatte 47 gegenüber den Rohrenden keine Rolle spielt. Es versteht sich, daß die Länge und die Lage der Kulissennuten 48 und 49 in der Kulissenplatte 47 so gewählt wird, daß die beiden aufeinander zu gerichteten Enden der Kulissennuten 48 und 49 den Schweißvorgang, der von einer Stauchung des Kunststoffes begleitet ist, nicht behindern. Die Führungszapfen 42 und 46 sollen also in der Regel nicht an den aufeinander zu gerichteten Enden der Kulissennuten 48 und 49 anstoßen.

Durch diese gewissermaßen "schwimmende Lagerung" des Heizelements 20 wird eine absolut symmetrische Schweißung gewährleistet, und zwar unabhängig von einem etwaigen ungenauen Einlegen der Rohrenden in die Einspannschellen. Die erfindungsgemäße Stumpfschweißmaschine wird dadurch auch für weniger geübtes Personal leicht bedienbar, da sich Einstellfehler gewissermaßen selbst korrigieren.

## Patentansprüche

1. Stumpfschweißmaschine (1) für Kunststoffrohre (2, 3) mit einem Maschinengestell (4) mit mehreren Einspannschellen (9, 10, 11, 12) für die Halterung der Rohrenden mit zur gemeinsamen Schellenachse (A1-A1) parallelen Führungen (8, 16) für die axiale Relativverschiebung der Einspannschellen zueinander und mit auf gegenüberliegenden Seiten der Schellenachse angeordneten Halteelementen (28, 29) für die Halterung eines Heizelements (20) für die Erwärmung der Rohrenden, wobei
a) das Heizelement (20) um eine zur Schellenachse (A1-A1) parallele Schwenkachse (A2-A2) schwenkbar in einem mit dem Heizelement auswechselbaren Tragkörper (23) gelagert ist,
b) das Heizelement (20) in Bezug auf seine Schwenkachse (A2-A2) gewichtsentlastet ist,
c) das Heizelement (20) mit einem Verriegelungselement (32) versehen ist, durch das es in der Heizstellung gegen eine Schwenkbewegung nach oben arretierbar ist,
d) dem Verriegelungselement (32) ein Auslöser (33) zugeordnet ist, durch den nach dem Aufheizen der Rohrenden und deren Rückzug das Heizelement (20) zum Aufwärtsschwenken entriegelbar ist, und wobei
e) die beiderseits des Heizelements (20) angeordneten Einspannschellen (9/10 und 11/12) Führungszapfen (42, 46) aufweisen, die mit Axialspiel in mindestens je eine achsparallele Kulissennut (48, 49) eingreifen, die jeweils in zwei beiderseits der Schellenachse (A1-A1) befindlichen Kulissenplatten (47) angeordnet sind, die mit den Halteelementen (28, 29) verbunden sind,
**dadurch gekennzeichnet**, daß
f) die Kulissenplatten (47) und damit das mit Ihnen verbundene Heizelement (20) nach Maßgabe des jeweils vorhandenen Axialspiels der Führungszapfen (42, 46) in den Kulissennuten (48, 49) durch die zu verschweißenden Rohrenden auf den Führungszapfen (42, 46) frei verschiebbar sind, und daß
g) der Auslöser (33) für die Aufwärtsbewegung des Heizelements (20) dem Tragkörper (23) für das Heizelement (20) zugeordnet ist.

2. Stumpfschweißmaschine nach Anspruch 1, **dadurch gekennzeichnet**, daß das scheibenförmige Heizelement (20) mittels eines radial abstehenden Fortsatzes (21) mit seiner Schwenkachse (A2-A2) verbunden ist, daß sich das Verriegelungselement (32) an dem Fortsatz (21) befindet, und daß ferner der Auslöser (33) an einer Seitenwand (25) einer das Heizelement (20) in seiner oberen Stellung umschließenden Kammer (24) befestigt und durch eine Fernsteuerung auslösbar ist.

3. Stumpfschweißmaschine nach Anspruch 2, **dadurch gekennzeichnet**, daß der Auslöser (33) eine in den Schwenkweg des Verriegelungselements (32) ragende, parallel zur Schwenkachse (A2-A2) verschiebbare Sperrklinke (34) aufweist, die durch einen Fernsteuer-Impuls aus dem Schwenkweg zurückziehbar ist.

4. Stumpfschweißmaschine nach Anspruch 3, **dadurch gekennzeichnet**, daß die Sperrklinke (34) einen elektromagnetischen Antrieb (42) besitzt.

5. Stumpfschweißmaschine nach Anspruch 3, **dadurch gekennzeichnet**, daß die Sperrklinke (34) einen hydraulischen Antrieb besitzt.

6. Stumpfschweißmaschine nach Anspruch 2, **dadurch gekennzeichnet**, daß der Auslöser (33) in einem an der Seitenwand (25) der Kammer (24) angebrachten Zusatzgehäuse (40) untergebracht ist.

## Claims

1. Butt-welding machine (1) for plastic pipes (2, 3) comprising a machine frame (4) with a plurality of clamps (9, 10, 11, 12) for holding the pipe ends with guides (8, 15) parallel to the common clamp axis (A1-A1) for axial relative displacement of the clamps relative to each other and with holding elements (28, 29) configured on opposite sides of the clamp axis for holding a heating element (20) for heating the pipe ends, and
a: the heating element (20) is mounted pivotally around a pivotal axis (A2-A2) which is parallel with the clamp axis (A1-A1) in a support element (23) which is exchangeable with the heating element;
b: the heating element (20) is relieved of weight as regards its pivotal axis (A2-A2);
c: the heating element (20) is provided with a locking element (32) by means of which it is in the heating position arrested against an upward pivotal movement;
d: the locking element (32) is associated with a release (33) by means of which the heating element (20) can be released for upward pivoting after termination of heating of the pipe ends and their retraction; and
e: the clamps (9/10 and 11/12) configured on both sides of the heating element (20) comprise guide pins (42, 46) which each engage with axial play at least one axis-parallel link groove (48, 49) which are respectively arranged in two link plates (47) located on both sides of the clamp axis (A1-A1), and which are linked to the holding elements (28, 29),
**characterised in that**
f: the link plates (47) and thus a thereto connected heating element (20) are freely displaceable on guide pins (43, 46) according to respectively available axial play of the guide pins (42, 46) in the link grooves (48, 49) through the pipe ends which are to be welded together, and the release (33) for upward movement of the heating element (20) is associated with the support element (23) for the heating element (20).

2. Butt-welding machine according to Claim 1, **characterised in that** the discshaped heating element (20) is connected to its pivotal axis (A2-A2) by means of a radially protruding extension (21), and the locking element (32) is positioned on the extension (21), and furthermore the release (33) is mounted on a sidewall (25) of a chamber (24) which encapsulates the heating element (20) in its upper position and triggered by remote control.

3. Butt-welding machine according to Claim 2, **characterised in that** the release (33) comprises a locking latch (34), which protrudes into the pivotal path of the locking element (32) and is displaceable parallel to the pivotal axis (A2-A2) and retractable from the pivotal path by a remote control pulse.

4. Butt-welding machine according to Claim 3, **characterised in that** the locking latch (34) is provided with an electromagnetic drive (42).

5. Butt-welding machine according to Claim 3, **characterised in that** the locking latch (34) is provided with a hydraulic drive.

6. Butt-welding machine according to Claim 2, **characterised in that** the release (33) is accommodated in a complementary housing (40) configured on the sidewall (25) of the chamber (24).

## Revendications

1. Machine de soudage bout à bout (1) pour des tubes en matière plastique (2, 3) comprenant un châssis de machine (4) avec plusieurs colliers de serrage (9, 10, 11, 12) pour le maintien des extrémités de tubes, avec des guidages (8, 16) parallèles à l'axe commun des colliers (A1-A1) pour le déplacement relatif axial des colliers de serrage les uns par rapport aux autres, et avec des éléments de maintien (28, 29) agencés sur des côtés opposés de l'axe des colliers pour le maintien d'un élément chauffant (20) pour le chauffage des extrémités de tubes, dans laquelle :
a) l'élément chauffant (20) est monté dans un corps de support (23) susceptible d'être échangé ensemble avec l'élément chauffant, avec faculté de basculement autour d'un axe de basculement (A2-A2) parallèle à l'axe des colliers (A1-A1),
b) l'élément chauffant (20) est déchargé vis-à-vis du poids par rapport à son axe de basculement (A2- A2),
c) l'élément chauffant (20) est pourvu d'un élément de verrouillage (32) au moyen duquel il est susceptible d'être arrêté dans la position de chauffage à l'encontre d'un mouvement de basculement vers le haut,
d) un déclencheur (33) est associé à l'élément de verrouillage (32), au moyen duquel l'élément chauffant (20) peut être déverrouillé pour un basculement vers lé haut après avoir chauffé les extrémités des tubes et après leur retrait, et dans laquelle
e) les colliers de serrage (9/10 et 11/12) agencés des deux côtés de l'élément chauffant (20) comportent des tenons de guidage (42, 46) qui s'engagent avec jeu axial dans au moins une gorge de coulissement respective (48, 49) parallèle à l'axe, lesdites gorges étant ménagées respectivement dans doux plaques de coulisseau (47) situées de part et d'autre de l'axe des colliers (A1-A1), lesdites plaques étant reliées aux éléments de maintien (28, 29),
caractérisée en ce que
f) les plaques de coulisseau (47) et l'élément chauffant (20) relié à celles-ci sont susceptibles de se déplacer librement sur les tenons de guidage (42, 46) dans la mesure du jeu axial respectivement existant des tenons de guidage (42, 46) dans les gorges de coulissement (48, 49) à travers les extrémités des tubes à souder, et en ce que g) le déclencheur (33) pour le déplacement montant de l'élément chauffant (20) est associé au corps de support (23) pour l'élément chauffant (20).

2. Machine de soudage bout à bout selon la revendication 1, caractérisée en ce que l'élément chauffant (20) en forme de disque est relié à son axe de basculement (A2-A2) au moyen d'un prolongement (21) en dépassement radial, en ce que l'élément de verrouillage (32) est situé sur le prolongement (21), et en ce que le déclencheur (33) est en outre fixé sur une paroi latérale (25) d'une chambre (24) qui enferme l'élément chauffant (20) dans sa position supérieure, et déclenchable par une télécommande.

3. Machine de soudage bout à bout selon la revendication 2, caractérisée en ce que le déclencheur (33) comporte un loquet de verrouillage (34) qui dépasse dans le trajet de basculement de l'élément de verrouillage (32) et susceptible de se déplacer parallèlement à l'axe de basculement (A2-A2), ledit loquet étant susceptible d'être rétracté hors du trajet de basculement suite à une impulsion de télécommande.

4. Machine de soudage bout à bout selon la revendication 3, caractérisée en ce que le loquet de verrouillage (34) comprend un entraînement électromagnétique (42).

5. Machine de soudage bout à bout selon la revendication 3, caractérisée en ce que le loquet de verrouillage (34) comprend un entraînement hydraulique.

6. Machine de soudage bout à bout selon la revendication 2, caractérisé en ce que le déclencheur (33) est logé dans un boîtier additionnel (40) monté sur la paroi latérale (25) de la chambre (24).
